Europäisches Patentamt

European Patent Office

Office européen des brevets

(19)

(11) Veröffentlichungsnummer: **0 163 067 B1**

# EUROPÄISCHE PATENTSCHRIFT

(12)

(45) Veröffentlichungstag der Patentschrift: 28.08.91

(51) Int. Cl.⁵: **B23K 1/20**

(21) Anmeldenummer: 85104075.8

(22) Anmeldetag: 03.04.85

(54) **Verfahren zum Aufbürsten von Metall auf die Oberfläche eines Metallkörpers.**

(30) Priorität: 05.04.84 DE 3412742

(43) Veröffentlichungstag der Anmeldung:
04.12.85 Patentblatt 85/49

(45) Bekanntmachung des Hinweises auf die
Patenterteilung:
28.08.91 Patentblatt 91/35

(84) Benannte Vertragsstaaten:
**AT BE CH DE FR GB LI NL**

(56) Entgegenhaltungen:
DE-C- 172 747
DE-C- 354 670
DE-C- 744 952
GB-A- 1 110 339

ZEITSCHRIFT FÜR METALLKUNDE, Band 63,
H.12, Dezember 1972, Seiten 775-781, Stuttgart; H. SCHOER et al.: "Entwicklung eines
Verfahrens zum flussmittellosen Löten von
Aluminium unter Schutzgas"

(73) Patentinhaber: **Forschungszentrum Jülich
GmbH
Postfach 1913
W-5170 Jülich(DE)**

(72) Erfinder: **Lison, Rudolf, Dr.
Bussardstrasse 28
W-5120 Herzogenrath(DE)**
Erfinder: **Dienstknecht, Hans
Am Daens 34
W-5163 Langerwehe(DE)**
Erfinder: **Sigismund, Egon
Kalkbergstrasse 181
W-5100 Aachen 38(DE)**

EP 0 163 067 B1

## Beschreibung

Die Erfindung bezieht sich auf ein Verfahren zum Aufbürsten einer Metallschicht auf die Oberfläche eines Metallkörpers in Luft mit einer rotierenden Bürste, gegen die sowohl das Beschichtungsmetall in kompakter Form als auch die zu beschichtende Oberfläche des Metallkörpers winkelversetzt angedrückt werden.

Das Aufbürsten bzw. Aufreiben von Metallbelägen auf die Oberfläche eines Metallkörpers ist seit langem bekannt: So wird gemäß der US-A-661 650 Kupfer, das in Form von Schwenkborsten an der Oberfläche eines rotierenden Körpers angebracht ist, in die Oberfläche einer Eisen- oder Stahlplatte geschlagen. Aus der US-A-3 606 672 ist ein weiteres Verfahren bekannt, nach dem ein Aluminiumteil in Form eines Winkelprofils gegen eine rotierende Bürste gedrückt wird, die gleichzeitig die Oberfläche einer Kupferplatte aufrauht, auf welche die von der Bürste abgenommenen Aluminiumteilchen "aufgeblasen" werden, was bedeutet, daß mit großen Bürstendurchmesser und hoher Fliehkraft an der Bürstenoberfläche gearbeitet wird.

Aus der DE-C3-2 308 747 ist ferner ein Verfahren zum Einbürsten von Metall, insbesondere Kupfer, in ein Niobband bekannt, bei dem das aufzutragende Metall als Band etwa gleichförmig zum Niobband bewegt wird und mit seiner Vorderkante gegen eine rotierende Bürste läuft, die Material auf das Niobband überträgt. Besonders hingewiesen wird dabei auf die Gefahr der Oxidbildung, weshalb vorzugsweise in reduzierender Atomosphäre, unter Schutzgas oder im Vakuum gearbeitet werden soll.

Schließlich wird in der US-A-2 914 425 eine Beschichtung von Basismaterial (aus Metall, Keramik, Holz odgl.) mit leicht schmelzbarem duktilen Metall (insb. mit Wood-Metall) beschrieben, bei dem eine mit dem leicht schmelzbaren Metall beladene rotierende Schleifscheibe ggf. unter Erwärmung gegen das Basismaterial gepreßt wird. So wird z.B. Wood-Metall auf Titan- oder Tantalblech aufgetragen, indem eine mit Wood-Metall beladene Schleifscheibe mit ca 500 - 1000 Upm gegen das Blech gepreßt wird, das ggf. auf etwa 60 °C erwärmt wird.

Trotz dieser seit langem bekannten Verfahrensweisen scheint sich das Aufbürsten von Metallschichten in der Praxis nicht durchgesetzt zu haben, möglicherweise wegen auftretender Oxidbildung oder Haftproblemen bzw. des Zwanges zur Arbeit in Schutzatmosphäre.

Ziel der Erfindung ist daher ein Aufbürstverfahren, das bei einfacher Arbeitsweise zu brauchbaren Schichten führt.

Dieses Ziel wird gemäß der Erfindung dadurch erreicht, daß man eine Bürste mit < 1mm starken, hoch verschleißfesten Borsten verwendet, deren Verschleißfertigkeit höher ist als diejenigen des zu übertragenden und des zu beschichtenden Metalls und die Bürste bei so geringem Winkelabstand zwischen Beschichtungsmetall und Werkstück auf derselben zumindest mit einer so hohen Drehzahl rotieren läßt, daß die Übertragungszeit der Metallteilchen vom Beschichtungsmetall hoher Duktilität auf das zu beschichtende Werkstück höchstens 5 ms beträgt.

Ein solches Aufbürstverfarhen wurde insbesondere für die Vorbeschichtung von Verbindungsflächcn für thermische Fügeverfahren, speziell flußmittelfreies Ofenlöten entwickelt.

Die Borsten sollen ausreichend hart und verschleißfest sein, insbesondere härter als das aufzutragende Metall, jedoch so elastisch, daß Unebenheiten der Werkstückoberfläche ausgeglichen werden können. Daraus ergibt sich, daß die Borsten feiner und länger gewählt werden für Werkstücke mit Oberflächenstruktur, während dicke Borsten bei glatten Oberflächen brauchbar sind. Handelsübliche Edelstahlbürsten (70 bis 150 mm ⌀) mit Borstenstärken unter 1 mm wurden erfolgreich getestet.

Die Flächendichte der Borsten richtet sich ebenfalls nach der Oberflächenstruktur und Härte der zu beschichtenden Teile, die durch die Bürste keine zusätzliche Struktur (wie etwa Riefen u.dgl.) erhalten sollen.

Vorzugsweise erfolgt der Übertrag des verbindungsfördernden Metalls auf das zu beschichtende Werkstück mittels einer rotierenden Tellerbürste oder insbesondere Zylinderbürste. Gegen eine solche rotierende Bürste wird das zu beschichtende Werkstück und das Beschichtungsmetall gedrückt, wobei die Andrückkraft von der zu beschichtenden Flächengröße und Oberflächenbeschaffenheit des Werkstoffs abhängt, sowie von der Geometrie der Bürste.

Beim zu beschichtenden Werkstück sollen durch die Bürste störende Fremdschichten wie z.B. Oxidschichten möglichst beseitigt werden, und auf die freigelegten Flächen sollen möglichst rasch, d.h. solange sie metallisch blank sind, Metallteilchen des Beschichtungsmetalls übertragen werden. Dabei muß insbesondere eine Reoxidation der zu beschichtenden Fläche vermieden werden, was durch eine entsprechende Geschwindigkeit der Bürste und Abstand von Beschichtungsmetall und Werkstück auf der Bürste (bzw. Winkel zwischen beiden Berührungsstellen) erreicht wird.

Aus mechanischen Gründen kann die Drehzahl einer rotierenden Bürste nicht beliebig gesteigert werden, ohne daß sich Borsten aufgrund der Fliehkraft aus der Bürste lösen. Die Bürste soll aber mindestens eine solche Drehzahl aufweisen, daß die Übertragungszeit für das Beschichtungsmetall höchstens 5 ms ausmacht. Mit sinkender Drehzahl nimmt im übrigen auch die Zahl der übertragenen Teilchen ab.

Das zu übertragende Metall muß eine relativ hohe Zähigkeit besitzen, die eine Haftung und Verteilung auf der freigelegten Werkstückoberfläche gewährleistet. Übliche verbindungsfördernde Metalle wie Nickel, Kupfer, Gold, Goldlot für 18/8-Stähle (z.B. mit Zusätzen von Titan) und Nickelbasislegierungen wie Au_18_Ni und alle Silberlote können ohne Schwierigkeiten aufgetragen werden.

Eine Beschichtung lediglich eng begrenzter Bereiche kann durch Abdecken der Restbereiche des Werkstücks mit einer Hartmetallschablone erreicht werden.

Die Aufbürstdauer ist weitgehend unkritisch, da nach ausreichender Übertragung des Beschichtungsmaterials auf das Werkstück keine weitere Dickenzunahme der Beschichtungsmetallschicht mehr stattfindet, die wie das Beschichtungsmetall selbst der Abriebwirkung der Bürste unterliegt. Übliche Beschichtungsdicken liegen im Bereich von $10^{-3}$ bis $10^{-1}$ mm und die Mindestaufbürstzeiten bei etwa 1 bis 2 Minuten.

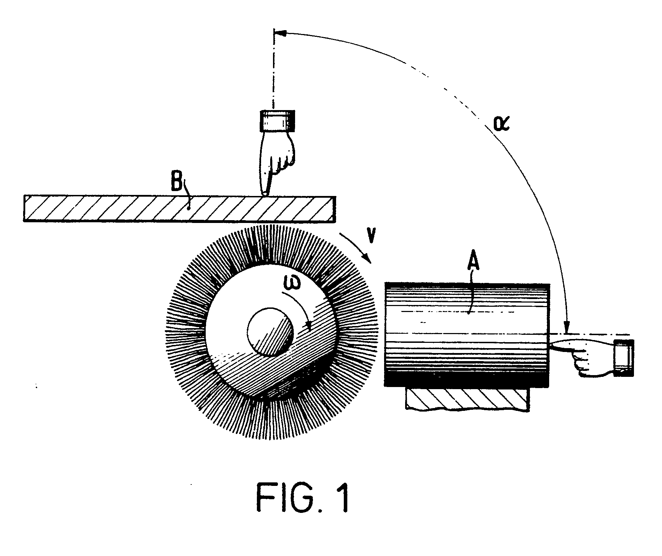

Ein Schema für eine Vorrichtung zur Durchführung des erfindungsgemäßen Verfahrens ist in Figur 1 dargestellt:
Die zu beschichtende Fläche des Werkstücks A wird gegen eine Edelstahlbürste 1 gedrückt, die mit einer Winkelgeschwindigkeit $\omega$ rotiert. Auf diese Weise wird die Oberfläche von A gereinigt. Zur gleichen Zeit wird der aufzutragende Werkstoff B um den Winkel $\alpha$ versetzt gegen die Bürste 1 gedrückt. Die Zeit t (in Sekunden) zwischen Freilegung der Oberfläche von A bis zum Übertrag von Teilchen des Werkstoffs B wird dann in Sekunden gegeben durch den Quotienten $\alpha/6$ n, wobei $\alpha$ in Winkelgraden und n in Umdrehungen pro Minute einzusetzen sind. Bei der gezeigten Versetzung von Werkstück A und Metall B um 90° erhält man mit Bürstendrehzahlen von 3000 U/min bzw. 6000 U/min Zeiten t von 5 ms bzw. 2,5 ms.

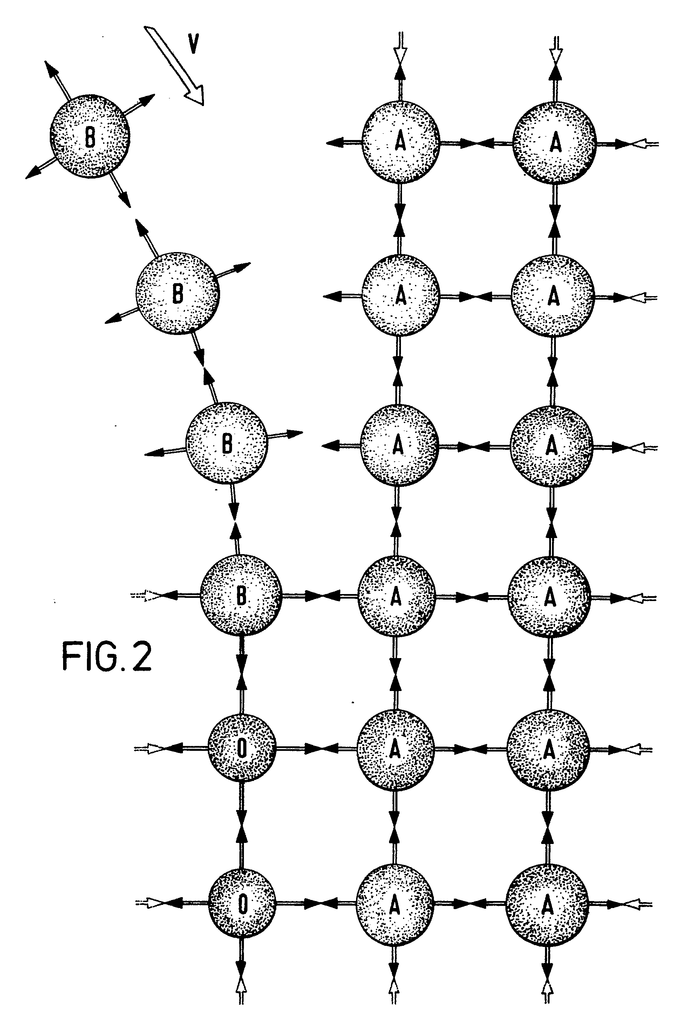

Figur 2 veranschaulicht im Schema die Oberflächenprozesse beim erfindungsgemäßen Verfahren: Die zunächst durch Oxid (oder Nitrid o.dgl.) abgesättigte Oberfläche des Werkstücks A wird durch den Angriff der Bürste von diesen Oberflächenschichten befreit, so daß "nichtabgesättigte" atomare Bindekräfte der Atome in der Oberfläche vorhanden sind, die durch entsprechende Metallteilchen des Beschichtungswerkstoffs B abgesättigt werden, die mit einer Geschwindigkeit v mittels der rotierenden Bürste übertragen werden. Die Beseitigung von absättigenden Oberflächenschichten findet ebenfalls beim Werkstoff B statt, aus dem von der Bürste Teilchen herausgerissen werden, deren metallische Bindekräfte nicht abgesättigt sind. Die Bürste transportiert solche Teilchen zum Werkstück A, wo sie mit Hilfe der freien Bindungen seiner Oberflächenatome angelagert werden. Auf diese Weise entstehen auf dem Werkstück A gut haftende dünne Schichten des Metalls B, die eine gute Vorbereitung der zu benetzenden Fläche für ein flußmittelfreies Ofenlöten von Werkstücken aus schwer benetzbaren Werkstoffen ergeben.

Mit diesem Verfahren können alle mit einer Bürste erreichbaren Flächen, insbesondere ebene und zylindrische Flächen für Fügeverfahren vorbereitet werden, wie für das Verschweißen unterschiedlicher metallischer Werkstoffe und insbesondere für flußmittelfreies Ofenlöten. Es erscheint ebenso geeignet für die Aufbringung von Haftschichten für thermische Spritzverfahren o.dgl.. Das Verfahren ist kostengünstiger als andere zur Zeit eingesetzte Beschichtungsverfahren.

## Patentansprüche

1. Verfahren zum Aufbürsten einer Metallschicht auf die Oberfläche eines Metallkörpers in Luft mit einer rotierenden Bürste gegen die sowohl das Beschichtungsmetall in kompakter Form als auch die zu beschichtende Oberfläche des Metallkörpers winkelversetzt angedrückt werden,
**dadurch gekennzeichnet,**
daß man eine Bürste mit < 1 mm starken, hoch verschleißfesten Borsten verwendet, deren Verschleißfestigkeit höher ist als diejenigen des zu übertragenden und des zu beschichtenden Metalls und die Bürste bei so geringem Winkelabstand zwischen Beschichtungsmetall und Werkstück auf derselben zumindest mit einer so hohen Drehzahl rotieren läßt, daß die Übertragungszeit der Metallteilchen vom Beschichtungsmetall hoher Duktilität auf das zu beschichtende Werkstück höchstens 5 ms beträgt.

2. Verfahren nach Anspruch 1,
**dadurch gekennzeichnet,**
daß man eine rotierende Zylinderbürste oder Tellerbürste verwendet.

3. Verfahren nach Anspruch 1 oder 2,
**dadurch gekennzeichnet,**
daß man Bürsten mit 70 bis 150 mm ∅ verwendet.

4. Verfahren nach einem der vorangehenden Ansprüche,
**dadurch gekennzeichnet,**
daß man Aufbürstzeiten von 1 bis 2 Minuten wählt.

## Claims

1. Process for brushing a metal layer onto the surface of a metal body in air by means of a rotating brush, against which both the coating metal in compact form and the surface of the metal body to be coated, which are angularly offset, are pressed, characterised in that a brush having < 1-mm-thick, highly wear-resistant bristles is used, the wear resistance of which is higher than those of the metal to be transferred and of the metal to be coated, and the brush is caused to rotate with such a small angular distance between coating metal and workpiece on the said brush and at least at such a high speed that the transfer time of the metal particles from the coating metal of high ductility to the workpiece to be coated is at most 5 ms.

2. Process according to Claim 1, characterised in that a rotating cylindrical brush or plate-shaped brush is used.

3. Process according to Claim 1 or 2, characterised in that brushes of 70 to 150 mm ⌀ are used.

4. Process according to one of the preceding claims, characterised in that brushing-on times of 1 to 2 minutes are chosen.

**Revendications**

1. Procédé pour apporter par brossage un métal sur la surface extérieure d'un corps métallique dans de l'air, comprenant une brosse tournante contre laquelle sont pressés à la fois le métal de revêtement sous forme compacte et la surface à revêtir du corps métallique, avec un déplacement angulaire, caractérisé en ce qu'il consiste à utiliser une brosse ayant des soies d'une épaisseur inférieure à 1 mm et très résistantes à l'usure, dont la résistance à l'usure est supérieure à celle du métal à transférer et du métal à revêtir, et à faire tourner la brosse, tout en ayant un écart angulaire si petit entre le métal de revêtement et la pièce à usiner, au moins à une vitesse de rotation si grande que la durée de transfert des particules métalliques du métal de revêtement de grande ductilité à la pièce à revêtir est au plus égale à 5 ms.

2. Procédé suivant la revendication 1, caractérisé en ce qu'il consiste à utiliser une brosse tournante cylindrique ou en forme de disque.

3. Procédé suivant la revendication 1 ou 2, caractérisé en ce qu'il consiste à utiliser des brosses d'un diamètre de 70 à 150 mm.

4. Procédé suivant l'une des revendications précédentes, caractérisé en ce qu'il consiste à choisir des durées d'apport par brossage de une à deux minutes.

FIG. 1

FIG.2